# EUROPEAN PATENT SPECIFICATION

(11) **EP 3 788 185 B1**
(45) Date of publication and mention of the grant of the patent: **01.11.2023**
(21) Application number: 19740429.6
(22) Date of filing: 06.05.2019
(51) Int. Cl.: C25C 1/16, C25C 7/02

(54) **ELECTRICAL INSULATION OF PLATE FORMED ELECTRODES**
ELEKTRISCHE ISOLIERUNG VON PLATTENFÖRMIGEN ELEKTRODEN
ISOLATION ÉLECTRIQUE D'ÉLECTRODES EN FORME DE FEUILLE

(30) Priority: 04.05.2018 NO 20180642
(43) Date of publication of application: 10.03.2021
(73) Proprietor: Partek AS, 5353 Straume (NO)
(72) Inventor: PARMANN, Georg, 5179 Godvik (NO); PARMANN, Christian, 5179 GODVIK (NO)
(74) Representative: Acapo AS
(86) International application number: PCT/NO2019/050101
(87) International publication number: WO 2019/212361

(56) References cited:
- WO-A2-2006/029428
- AT-B- 403 808
- US-A- 4 377 428

## Description

### Field of the Invention.

The present invention relates to a method to fasten one or more electrically insulating thermoplastic bodies onto an electrode plate for the precipitation of metal from an electrolyte, and also a device to carry out the method.

Thus, the present invention describes a method and associated production equipment to be able to fasten an electrically insulating material (such as, for example, plastic) to electrically conducting electrode plates.

The electrically insulating material can be, for example, in the form of flat plates that are fastened to the electrode plates or in the form of U-shaped profiles along the edges of the electrodes.

The present invention describes, among other things, a method and associated production equipment to enable fastening a largely U-shaped profile of an electrically insulating material, such as a thermoplastic, to the edges of an electrically conducting electrode plate that is used for precipitation of a metal from an electrolyte. The electrically conducting electrode plate can be made, for example, from aluminium. The metal can be, for example, zinc, and the electrolyte can be sulphuric acid.

The present invention also describes a method and production equipment that enables fastening of relatively narrow plate strips to especially exposed areas on the electrode plates.

Dependent on what is to be precipitated from the electrolyte, for example nickel, copper or zinc, the plates can be made from stainless steel, titanium or aluminium. The plates are lowered vertically down into tanks that contain the electrolyte, and with the help of an electric current the metal to be recovered adheres onto the surfaces of the plates (the electrodes) that are in direct contact with the electrolyte.

The uppermost edge of the electrode plates is fastened to a suspension device which also leads the electrical current up to the plates. This suspension device is also used to raise and lower the plates down into and up out of the electrolyte. The plates are not lowered further down in the electrolyte than for the suspension device with the electrically conducting device to be positioned above the surface.

The area where the surface of the electrolyte meets the plate after the plate is lowered down is called the sloshing zone. The U-shaped profiles are fastened on both the vertical edges of the electrode plate so that they surround these. Thus, the metal that shall be precipitated out from the electrolyte cannot fasten itself to these vertical edges as the edges do not make contact with the electrolyte. If the vertical edges were not insulated the precipitated matter on both sides of the plate would hang together along these edges and make it very difficult to remove the precipitated material.

When a desired coating of the precipitated material has fastened onto the plate, it is hoisted up from the electrolyte bath. The removal of the precipitated coating from both sides of the electrode plate takes place by the help of knife-shaped appliances that shave off the coating that has fastened. The shaving starts uppermost on the plate and peels the coating off vertically downwards. The bottom horizontal edge of the electrode plate is normally not insulated with a profile since it is not a hinderance to the peeling that the precipitated material on both sides of the electrode plate hangs together along this bottom edge.

### The aim of the present invention

In practice, it has been found that the insulation of the vertical edges of the plates represents a weak link in the production process as the U-shaped profiles come loose from the plate edges long before the rest of the plate is worn out.

The sloshing zone is an area on the electrode plate that is subjected to corrosion from the electrolyte and this area is therefore electrically insulated with plate strips that prevent corrosion. However, it has been found that the fastening of such plates is also a weak point as the plates become loose before the rest of the electrode plate is worn out.

Thus, the aim of the present invention is to provide a method and production equipment to fasten edge profiles and plate strips onto electrode plates in an improved manner so that they do not loosen before the rest of the electrode plate is worn out.

### Description of prior art.

Over the past 40 years many solutions have been presented to prevent the U-shaped edge profiles from becoming loose, and the technical situation today can be seen in the following publications: EP 0 454 056 A1, WO 2005/057/682 A3, US 8,617,443 B2, EP 1 789 610 B1 /PCT/AT 2005/000363, Base Metals Conference 2013; The South African Institute of Mining and Minerallurgy av Authures: L. Nordlund and H. Virtanen, http://wwwsaimm.co.za/Conferences/BM2013/089-Nordlund.pdf and http://www.cathodex.com/edqe-strip-technology

EP 0 454 056 A1 is a European Patent Application (with priority from 1990) that describes a U-shaped profile for insulating the edges of a cathode plate. It describes how one can achieve a better adherence between the profile and the cathode plate by manufacturing the profile from a co-polymer polyolefin with the special property that it adheres well to aluminium when it is melted.

Patent WO 2005/057/682 A3 describes a technology and an apparatus for the manufacture of insulating plastic profiles on the plate edges (the electrode edges) by extruding these directly onto the edges that shall be insulated. It describes a nozzle that surrounds the plate edge and which glides gradually along as a plastic melt in the nozzle surrounds the edge. The gliding nozzle that surrounds the plate edge is formed such that the melt is formed into a U-shaped insulating profile. This solution does not function in practice, as it is not taken into account that the hot plastic melt shrinks during the cooling and loses its grip on the surface of the plate. The melt pressure that arises as long as the melt is in the nozzle disappears when the nozzle glides along the plate edge, and the subsequent cooling of the melt leads to the profile shrinking concurrently with the cooling, and the profile loosens it pretensioning against the surface of the plate.

Patent US 8,617,443 B2 describes a technology that is a continuation of the technology that is described in WO 2005/057/682 A3. This patent describes a process and an associated feature where the gilding nozzle is replaced by a stationary, closed forming tool. Instead of an extruding process, a injection molding process is used here. The forming tool is fitted with different alternative shapes of a piston that compresses the plastic melt in the tool during the cooling so that the associated shrinkage is compensated for. Instead of refilling with a new melt to the closed shape to compensate for the reduction in volume when the melt is cooling, different shapes for mechanical pistons are used that gradually reduce the volume of the moulding form as the melt cools down and shrinks. It is not clearly described how the plastic melt is applied to the extended shaping tool, but it must be assumed that this takes place through a supply pipe from the injection molding machine. From the inlet opening in the forming tool there are long float channels for the melt with associated differences in the melt pressure inside the forming tool. The moulding process probably provides no proper control of the melt pressure along the electrode edge inside the forming tool. In one of the many variants of the moulding process that are described it is also included that the forming tool is not filled with plastic melt, but with non-melted plastic granules which are plasticized in the forming tool itself. This solution will give a product with much entrapped air and it is not described how this air can be released from the mold. As explained later in this application it is important that no air pockets arise in the contact surface between the electrode plate and the insulating plastic.

Patent EP 1 789 610 B1 / PCT/AT2005/000363 describes how a prefabricated electrically insulating protective plate can be melted on to the surface of an electrode plate without entrapped air bubbles being formed between the electrode surface and the protective plate. The surface of the electrode is preheated in the area where the protective plate shall be melted and fastened. The protective plate is squeezed against the hot electrode plate with a squeezing tool which is comprised of an arched steel spring made from a flat steel where the protective plate is fastened to the outside of the flat steel. The patent describes how the arched steel spring forces the protective plate to lie against the hot electrode surface and that the squeezing force that starts in the middle of the arched steel spring, will propagate out to each side as the arched steel spring is squeezed flat against the electrode plate. The surface of the protective plate melts as a consequence of the contact force against the hot electrode surface at the same time as entrapped air between the protective plate and the electrode plate is forced out as a consequence of the arched steel spring being squeezed flat. The squeezing force which is exerted against the plastic plate and the electrode will be greatest where the flat steel makes the first contact and the squeezing force will decrease towards the sides. It will not be possible to obtain an evenly distributed squeezing force along the plate that shall be melted on. Where the squeezing force is greatest, the melt could be forced out to the sides and where the squeezing force is smallest the melting pressure could be too small to achieve optimal conditions. Such a squeezing tool with an arched flat steel will neither be able to follow the contours of an electrode plate if this is somewhat deformed or has an uneven surface.

Base Metals Conference 2013; The South African Institute of Mining and Minerallurgy: Authures: L. Nordlund and H. Virtanen. http://wwwsaimm.co.za/Conferences/BM2013/089-Nordlund.pdf and also http://cwww.cathodex.com/edge-strip-technology is a report that describes that the U-shaped edges (edge strips) that are used on the electrode plates to insulate the edges electrically represent a weak point in the production process. Quotation: *"Cathode maintenance predominantly involves the regular checking and replacing of damaged edge strips, followed by cathode straightening and cleaning of residual copper deposits (often a result of poor edge strip performance). Edge strips typically need to be replaced every few years in a waxless process, and throughout the history of permanent cathode technology there have been many attempts to improve the edge strip performance by making prefabricated edge strips fit more tightly and seamlessly to the edges of the permanent cathode. To date, these efforts have met with limited success".* This shows that in this field there is, and has been for a long time, a great need for a method to fasten the edge profiles onto the electrode plates in a better way.

As can be seen in the references above it is acknowledged in these fields that the plastic profiles that are used to insulate the edges on the electrode plates become loose if the profile does not lie closely surrounding the electrode edge so that no electrolyte can enter as a consequence of capillary forces etc.

Any form of slit opening between the inside of the profile and the surface of the electrode will lead to the electrolyte being able to penetrate in as a consequence of capillary forces and lead to wear on the electrode surface such that the profiles become loose. The slit openings can occur as a consequence of air entrapments arising between the electrode plate and the profile. Similarly, slit openings can occur between the profile and the electrode plate if the profile is hot and a pressure that forces the profile against the electrode edge is not maintained during the whole cooling process.

The state of the technology today is still that the electrode plates must be taken out of production and fitted with new insulating plastic profiles before the electrode plate itself is worn out. This is also the case for the protective plates that are fastened to the electrode plates in the sloshing zone.

### What is achieved by the present invention with respect to prior art

The present invention describes a method and a device for the fastening of plastic profiles to the edges of the electrodes such that a particularly durable fasting of the profiles is achieved. A corresponding method and device are adapted for the fastening of protective plates in the sloshing zone.

This durable fastening is obtained by that the profiles and the protective plate are firmly forced against the electrode plate in a particularly controlled way during the melting-on process and during the subsequent cooling process.

The squeezing pressure is an important parameter during the course of the melting and during the course of the cooling, and with the present invention it will be possible to hold the squeezing pressure the same for the whole profile (alternatively the protective plate) in the longitudinal direction. The profile (alternatively the protective plate) will be squeezed with the same force against the electrode plate along the whole length of the profile even if the electrode plate is misshapen and has an uneven surface.

In the melting area between the plastic profile (and the protective plate, respectively) and the electrode surface there could be entrapped air that has to be evacuated. By adjusting the force against the plastic profile (alternatively the protective plate) one achieves that the air gets a chance to be evacuated out of the melting area.

With the present invention the course of the pressure during the on-melting process and during the cooling down process can be regulated in a continuous manner so that an optimal squeezing pressure is obtained during the whole welding-on process.

With the present invention the course of the temperature during the melting-on process and during the cooling down process can be regulated in a continuous manner such that optimal conditions during the whole welding-on process are achieved.

Such control of the process parameters is important as a balance between the different process parameters must be found so that unwanted tensions and shrinkage shall not reduce the adherence. For example, attention is given to the large difference in temperature coefficients of expansion related to the thermoplastic melt between profile and electrode surface and between the electrode plate and the form-stable part of the profile.

The present invention does not only aim to achieve a very good controlled contact pressure and cooling down course against the insulating plastic profile (and the protective plate, respectively) and the electrode plate during the welding-on process, but aims also to achieve that the plastic profile is chemically glued to the foundation.

To achieve such glue connection the plastic profile (and the protective plate, respectively) is preferably manufactured from a material which is technically described as a grafted polymer. This means that the plastic material can chemically bind to the electrode surface as a glue. For such a grafted polymer to be able to bind optimally to the electrode surface, optimal conditions are required in terms of temperature, pressure and time.

The heating of the electrode plate is normally carried out in a dedicated, controllable process step which is not described further herein as there are many alternative, well known ways to heat up an electrode plate. This can be with hot air, infrared radiation, gas flame, direct contact with heating elements that are electrically heated or heated by induction and also in different ways, etc.

### Summary of the invention

Thus, the method according to the present invention is characterised in that it is comprised of the following steps:
a) the area on the electrode plate where the plastic body is applied is heated to a temperature at or above the melting point of the plastic body,
b) the plastic body is placed on the heated surface of the electrode plate, and the surface of the thermoplastic body that is in contact with the heated surface of the electrode plate melts,
c) a force is applied to the plastic body that pushes the plastic body against the surface of the electrode plate, where the pressure force is formed by one or more hoses and
d) the plastic body and the electrode plate are cooled down, while the pressure force is maintained until the shape of the thermoplastic is stable.

According to a preferred embodiment of the present invention in steps c) the pressure force against the insulating plastic body will first be apparent in the area in and around the centre line of the cross section of the plastic body and thereafter spread out to both sides of the centre line so that the whole of the plastic body is firmly forced against the electrode plate at the same time as this pressure force against the plastic body is even along the whole extent of the plastic body. It is more preferred that entrapped air inside the melt between the thermoplastic body and the electrode plate is forced the shortest way out of the melt formed by the thermoplastic body. Even more preferred is that the internal pressure in the hose(s) cooperates with the tangential stretch in the hose surface in such a way that the air in the melt between the hot electrode plate and the internal surface of the plastic body is forced out of the melting area.

According to another preferred embodiment of the present method the cooling down in step d) takes place during increasing applied pressure force from the hose(s).

According to another preferred embodiment of the present method the pressure force from the hose(s) against the plastic body on the surface of the electrode plate in step c) and/or step d) is changed by addition of a pressure medium, preferably air or water, to the hose(s) and/or in that the hose(s) are forced between the side walls in a chamber where the method takes place and the plastic body on the electrode plate. Even more preferred is that the hose(s) are blocked at each end with end plugs connected with a strut that keeps the end plugs at a constant distance from each other and takes up the tension forces which otherwise would operate in the longitudinal direction of the hose(s) when they are pressurised, and where the hose(s) preferably keep their circumference independent of the internal pressure. Even more preferred is that the hose(s) are blocked at both ends by end plugs connected to a strut that maintain the end plugs at a constant distance from each other and that the struts can be adjusted with respect to the electrode plate. According to another preferred embodiment of the present method an insulating soft mat of a heat resistant material is placed between the thermoplastic body and the hose(s) before step c).

According to another preferred embodiment of the present method the thermoplastic body (ies) are edge profiles or plate strips which are applied to one or more edges or surfaces of the electrode plate.

According to another preferred embodiment of the present method the hose(s) are reinforced, preferable by fibres in the form of a tissue.

The invention relates to a device to fit electrode plates, for the precipitation of a metal from an electrolyte, with one or more electrically insulating thermoplastic body/bodies such as edge profiles or plate strips that are forced against a previously heated part of the electrode plate where one or more hoses are arranged along the insulating body that shall be fastened to the electro plate and that this hose / these hoses are pressurised and lie against the insulating body and force this to make contact against the electrode plate.

Thus, the device according to the present invention is characterised in that it is comprised of:
means to hold and bring the electrode plate to wanted position(s),
means to heat up one or more chosen areas of the surface of the electrode plate,
means to bring one or more insulating thermoplastic bodies onto the chosen areas on the electrode plate,
one or more hoses arranged to apply pressure against the electrically insulating thermoplastic bodies on the chosen areas of the electrode plate, and also
means for the cooling down of the thermoplastic bodies, preferably cooling channels in the device and/or the use of water as a pressure medium in the hoses.

Means to hold and place the electrode plate to a wanted position(s) that can be, for example, an arm or a stiffened beam with a hoop, as described below for specific embodiments, or other methods to hold and move the electrode plate.

Means to heat up one or more selected areas of the surface of the electrode plate and means to bring one or more electrically insulating thermoplastic bodies onto the chosen areas on the electrode plate which can be adapted to the device and is known in the technical field.

According to a preferred embodiment of the present device it is comprised of:
a force transmitting element placed against the edge of the electrode plate and set up to apply a force against the edge of the electrode,
a chamber with a slit opening that is at least slightly larger than the electrode plate with a fitted edge profile and is set up so that the edge of the electrode plate with a fitted edge profile can pass through it,
one or more hoses placed on each side of the electrode plate inside the chamber set up to exert a pressure against the profile, and
a protrusion in the chamber set up so that the edge profile lies against the protrusion when the force transmitting element is activated against the end edge of the electrode plate. The chamber has preferably arch-formed side walls.

According to another preferred embodiment of the present device it is comprised of:
a force transmitting element placed against the edge of the electrode plate and set up to apply a force against the electrode edge,
a chamber with a slit opening that is at least somewhat larger than the electrode plate with a fitted edge profile and is set up so that the edge of the electrode plate with fitted edge profile can pass through,
a hose placed inside the chamber set up to apply a pressure against the edge at the end of the electrode plate and the thermoplastic edge profile so that these are being squeezed against the hose which is forced against the sides and the bottom of the chamber when the force transmitting element is activated and presses against the edge of the electrode plate or when the hose is pressurised. It is preferred that the chamber has arch-formed side walls.

According to another preferred embodiment of the present device it is comprised of a positioning appliance that places a rigid loop which holds a hose set up to be pressurised inside the loop, where the positioning appliance can be moved towards the plate strip or vice versa such that the hose applies an even pressure in the longitudinal direction against the electrode plate when the hose is pressurised.

According to another preferred embodiment of the present device the cooling down takes place in step d) with the help of cooling channels in the device to apply an edge profile, or cooling channels in a construction table which the electrode plate is placed on to apply a plate strip and/or by a through-flow of water in the hoses, respectively.

### Description of the figures

Preferred embodiments of the invention shall be described in more detail in the following with reference to the enclosed figures, in which:
Figure 1 shows an electrolysis bath with mainly sulphuric acid and zinc sulphate into which a cathode plate of aluminium is immersed.
Figure 2 shows a section A-A in fig. 1 where the U-shaped insulation strip 2 is fastened to the edge of the cathode plate 1.
Figure 3 shows a section B-B where the protective plates 31a and 31b are shown in the sloshing zone 42.
Figure 4 shows a schematic cross section of an appliance for fastening of a U-shaped profile to one of the edges of the cathode plate.
Figure 5 shows figure 6 with addition of a protective shim.
Figure 6 shows the appliance in figure 4 where the hoses are pressurised.
Figure 7 shows a cross section of an appliance for fastening of an insulating plate onto an electrode plate before the hose comes into contact with the thermoplastic plate.
Figure 8 shows the appliance in figure 7 when a pressurised hose has pressed the whole of the thermoplastic plate to lie against the electrode plate and the cooling down can start.
Figure 9 shows a modified appliance of figure 6 where only one hose is used to force the profile (2) to lie against the edge of the electrode plate (1).
Figure 10 shows how the tangential stretch in the hose material attempts to push the U-shaped edge strip radially outwards when the hose (2) is pressurised.
Figure 11 shows how the internal pressure presses on the hose material and the U-shaped edge strip in figure 10.

### Detailed description of the invention

The area on the electrode plate that shall be insulated with a largely U-shaped thermoplastic profile and/or a protective plate is heated up to a temperature above the melting point of the profile.

The profile (and the protective plate, respectively) is positioned on the hot electrode plate and the surface that comes into contact with the hot electrode plate will melt.

The electrode plate with the applied insulating profile (and the protective plate, respectively) is subjected to a pressure force that presses the insulation material to lie against the surface /surfaces of the electrode. This pressure force is established by one or more hoses that have been supplied with a pressure medium or are supplied with a pressure medium such as, for example air, so that the hose / hoses press against the insulating material. The contact pressure is arranged so that it will simultaneously force out any entrapped air bubbles.

The cooling down of the insulating material and the electrode plate can take place with the help of cooling channels in the appliance that is used for the welding and where the electrode plate is kept until the melt is cooled down and has a stable form.

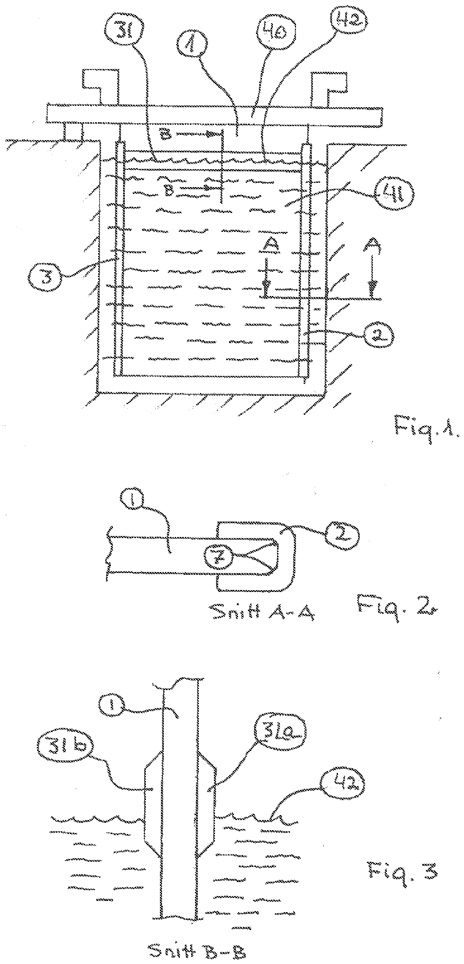

To describe the information in more detail reference is made to the subsequent figures where figure 1 shows an electrolyte bath with mainly sulphuric acid and zinc sulphate 41 into which a cathode plate 1 of aluminium is immersed. Both edges of the plate are fitted with U-shaped profiles 2 and 3 of an insulating thermoplastic material. The plate 1 is fastened to a suspension device 40 which is used to hang up the plate and also to provide the aluminium plate with electricity. The plates are lowered down into and hoisted up from the electrolyte with the help of a lift device (not shown) that grips the traverse 40.

The cathode plate is not completely submersed into the electrolyte, but to a level 42 which is described as the sloshing zone and it is here the electrolyte meets the surrounding air. The insulating profiles 2 and 3 extend over the sloshing zone 42 but are completed before they reach all the way up to the traverse 40. A protective plate 31 is fastened onto the electrode in the sloshing zone so that the electrolyte in the sloshing zone does not touch the metal in the electrode plate. The area of the cathode plate 1 that lies in the sloshing zone is particularly exposed to corrosion if it is not protected.

The cathode plates 1 can be of different sizes dependent on the size of the electrolyte baths into which the electrode plate is to be submersed. The plate thickness can be of the order of 5-10 mm.

Fig. 2 shows a section A-A in fig.1 where the U-shaped insulation strip 2 is fastened to the edge of the cathode plate 1. It is preferred that the sharp corners 7 on the plate edge are somewhat beveled (broken).

Figure 3 shows a section B-B where the protective plates 31a and 31b are shown in the sloshing zone 42.

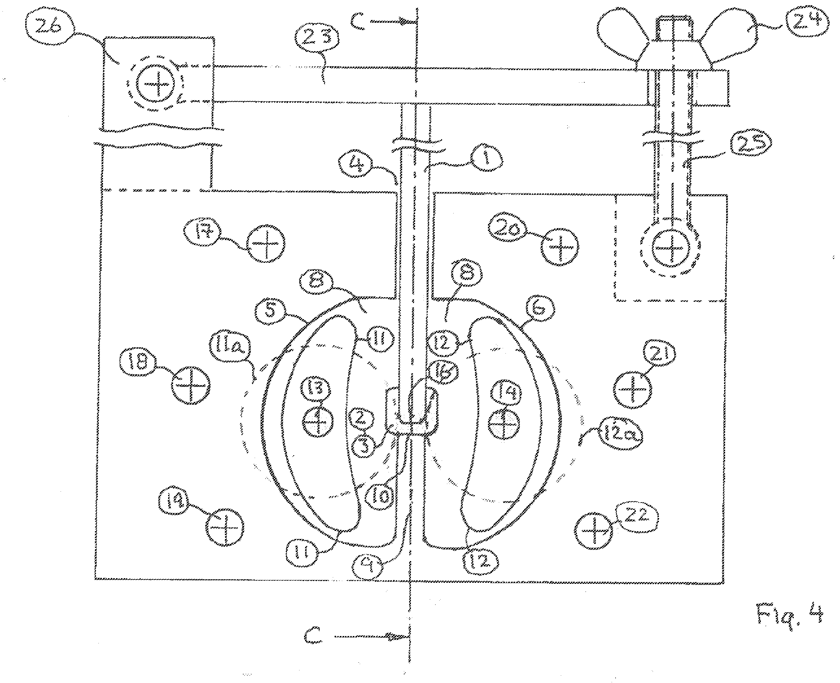

Figure 4 shows a schematic cross section of an appliance for fastening one of the U-shaped profiles 2 (alternatively 3) to one of the edges of the cathode plate 1 which in this example is made from aluminum for the precipitation of zinc from an electrolyte of sulphuric acid. The arrangement is longer than the length of the cathode plate 1 such that the whole of the profile 2 (alternatively 3) lies inside a chamber 8. The traverse 40 is normally welded to the aluminum plate after the U-shaped strips are fastened at the edges.

Before the cathode plate 1 is led into the chamber the edge onto which the profile 2 (alternatively 3) shall be applied, is heated up to a temperature that is higher than the melting point of the thermoplastic material which is used to make the profile. It is preferred that the thermoplastic material, from which the profiles 2 (alternatively 3) are made from is a grafted polymer. That means that the polymer is modified such that it will firmly stick to the aluminum plate 1 under the right conditions.

When the profile is placed onto the hot plate edge the internal contour of the U-shaped profile melts sufficiently for the profile to hang onto the aluminum. The plate edge with the profile is now led into a chamber 8 through a slit opening 4. The profile 2 (alternatively 3) is first pressed to lie against the protrusion 9 in the pressure chamber 8. Thereafter, the profile is at the same time pressed from both sides with the help of two inflatable hoses 11 and 12.

Figure 4 shows schematically and principally how the aluminum plate with the profile can be held with a required force against the protrusion 9. The hinged arm 23 forces the plate down and firmly locks the plate with a required force with the help of a pivoting bolt 25 and wing nuts 24. One can obtain this force with many other means than with an arm 23 that presses onto the plate edge. The embodiment with an arm 23 that presses onto the electrode plate 1 is chosen to show in a simple way that according to the invention it is necessary with a pressing force between the U-shaped profile and the electrode plate. In an industrially automated use of the invention a preferred embodied would be, for example to arrange the electrode plate horizontally and apply the U-shaped profiles at the same time on both sides of the electrode plate. The pressure force that is applied against the profiles will then be obtained in that the welding on device according to the invention is arranged on each side of the electrode plate and led towards this with the help of linear guiding or the like so that the electrode edges, with affixed U-shaped profile, are led into the chamber where the profiles will be pressed firmly to the electrode edges.

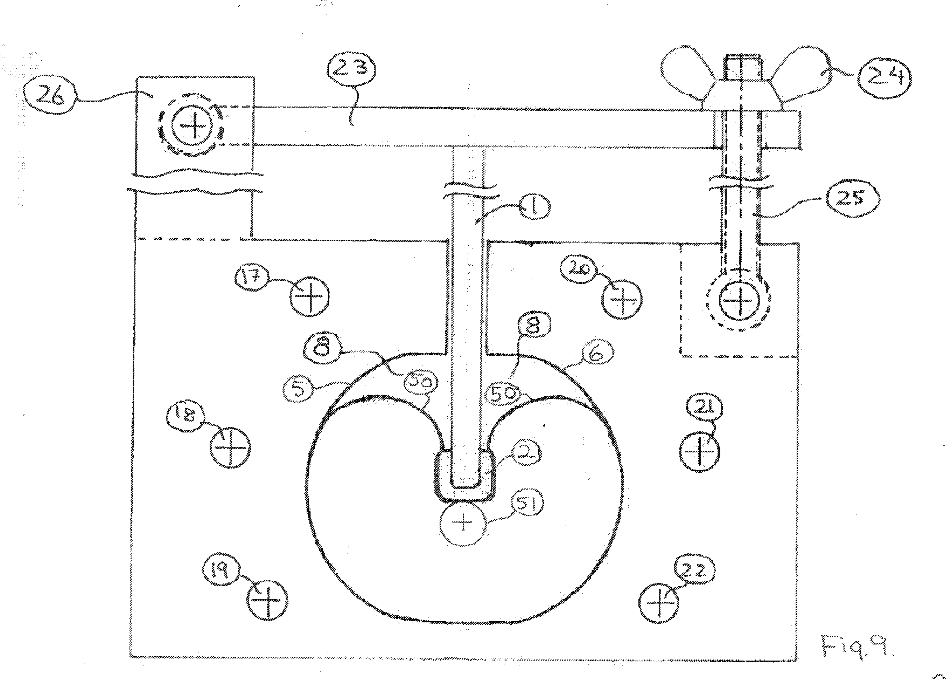

The protrusion 9 in figure 4 can be manufactured from a rigid material such as aluminum or steel, while the end plate 10 can be from a more elastic material. The protrusion can also be a yielding material in that this part of the construction can be set up as a slide that rests on a torsion spring or the like. An alternative is also to replace the protrusion 9 with an inflatable hose as shown in figure 9. In such a preferred embodiment the chamber 8 is fitted with a though-running hose 50 that is longer than the length of the electrode plate and which is fitted at each end with an end plug where air can be supplied to pressurize the hose 50. The end plugs are secured together with a strut 51 that takes up the tension forces when the hose 50 is pressurized. In a preferred embodiment the hose 50 will be pressurized when the electrode plate 1 with the profile 2 is forced down in the chamber 8. The electrode plate 1 with the affixed profile 2 will then be forced against the pressurized hose. The bottom of the U-shape 2 will first hit the hose 50 as this is extended and has a circular cross section. In this way, air that is entrapped in the melt between the electrode plate 1 and the U-profile 2 will firstly be forced out from the bottom of the U-profile and thereafter further up along the side edge. In a preferred embodiment the electrode plate 1 with the profile 2 lies against the strut 51 so that the electrode edge is forced against the bottom of the profile and presses into the melt that lies there.

The hose 50 can also enwrap the whole of the external surface of the profile 2, but if it is important to remove all air in the melt between the electrode plate and the U-profile it is preferred that the hose surrounds the profile as shown in figure 9.

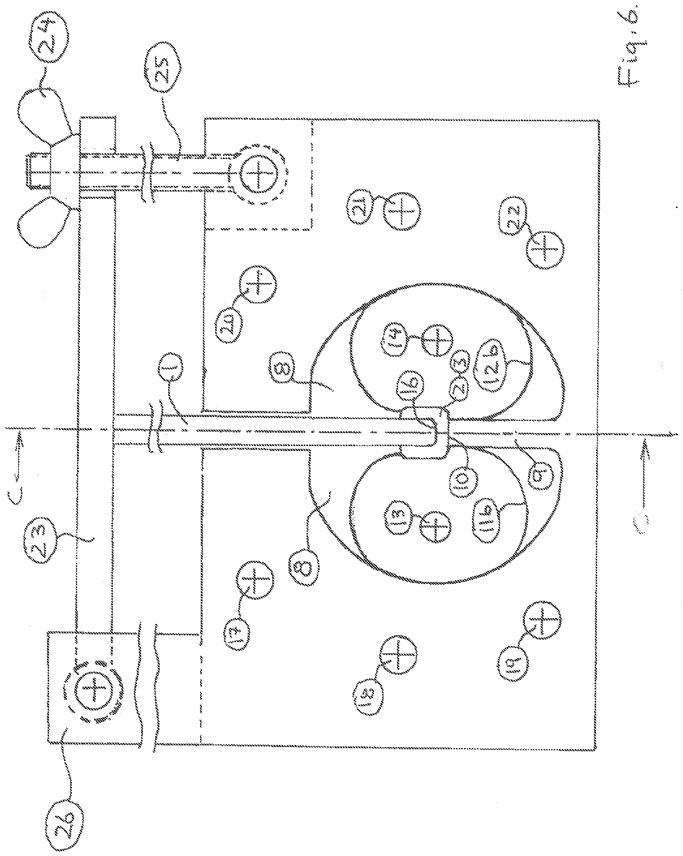

In the same way as explained with reference to figure 6 the collaboration between the pressure forces from the pressure medium and the tensile forces in the hose surface will also here lead to the largest pressure forces against the profile 2 existing at the bottom of the profile such that the air that might be baked into the melt on the internal surface of the profile 2 can be forced out to the surrounding air.

As explained above in another preferred embodiment of the invention two hoses can be used as shown in figure 4. The electrode plate 1 with the profile 2 is led into the chamber 8 and made to lie against the protrusion 9. The top plate 10 on the protrusion 9 will push against the underside of the profile 2 and force the profile to lie against the edge of the electrode plate 1. When the hot plate edge 16 is forced to lie against the bottom of the U-shaped profile 2 the hot plastic surface in the contact area will melt and lead to an imprint of the plate edge against the bottom of the profile. It is preferred that the plate edge has beveled corners such that entrapped air in the plastic melt will be forced out to the sides.

The two longitudinally running hoses 11 and 12 extend the whole length of the pressure chamber and past the ends of the U-shaped profile 2. According to a preferred embodiment of the invention the device is fitted with stretch-struts 13 and 14.

In each end the hoses are preferably sealed with a plug (not shown in the drawings), where the stretch-struts are fastened such that the struts take up the tensile forces which otherwise would act in the hoses when these are filled with a fluid such as air or water. There are also devices in the end plugs for the supply of fluid. The end plugs can be placed in each end of the chamber and be kept there in a wanted position with regard to the electrode plate 1.

The chamber 8 with the two hoses are symmetrical about the section C-C in figures 4, 5 and 6. In a preferred embodiment the two hoses 11 and 12 are reinforced by a tissue and are of the type lay flat hose. That means that the hoses take up an approximately elliptical or flat cross section when they are relieved of internal pressure.

The chamber where the hoses are placed has preferably arch-shaped side walls 5 and 6 and the lay flat hoses 11 and 12 will therefore take up a somewhat banana-formed cross section in a relieved state as shown in figure 4. The side walls 5 and 6 are arch-shaped so that the hoses shall not be strained more than necessary when they are pressurized and try to take up a round cross section. The side walls 5 and 6 can also be flat, something which will simplify the construction, but at the same time be less gentle on the wear of the hoses 11 and 12. Where the chamber ends at each end of the U-shaped profile 2 a soft transition is made to a circular cross section by and large corresponding to the diameter of the hoses. The length of the chamber where the melting-on of the U-shaped profiles will take place is made large enough so that there is room for the whole of the electrode edge. The construction can be manufactured in many ways, but in a preferred embodiment the construction is built up of plates that are water cut in aluminum.

The arch-shaped side walls 5 and 6 in the chamber 8 support the hoses along the whole length, but the water-cut plates that the arch-shaped side walls are fastened to can be held at a distance from each other to make the welding appliance more open such that the process is easier to monitor.

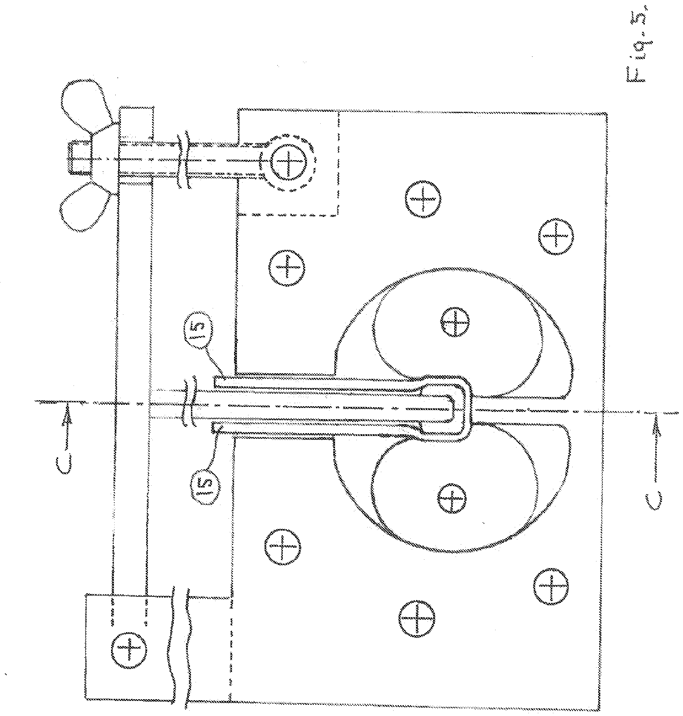

For example, the tissue can be polyester fibers and the material which impregnates the tissue can be of a flexible heat resistant material such as silicone rubber or the like. Other less heat resistant impregnation materials can also be used in the hose, such as, for example the particularly durable thermoplastic material, polyurethane, but it is then preferred to use a protective shim 15 in the form of a heat resistant mat of a flexible, elastic material such as silicone or the like, as shown in figure 5. Such a soft elastic mat 15 will also be able to give a particularly good distribution of the pressure forces from the hoses 11 and 12 against the U-shaped profile.

The tissue reinforced lay flat hoses are used to exert a pressure against the profile such that the whole of the internal surface of the profile melts in contact with the warm plate edge and at the same time forms more accurately according to the surfaces of the electrode edges. The pressure against the profile is set up so that any air that sits between the profile and the warm plate edge can be forced out in a controlled way.

The pressurized hoses will be forced to lie against the surfaces 5 and 6 at the same time as they will be forced against the profile 2 as shown by 11b and 12b in figure 6. The force against the profile 2 that is fastened on the plate edge 1 will be approximately the same for the profile for the whole of its longitudinal direction. The positioning of the hoses 11b and 12b in regard to the profile 2 is decisive for how the profile is forced towards the plate edge. If the hoses 11b and 12b in this example had not been supported by the arch-formed side walls 5 and 6 and also the U-shaped profile 2, the hoses would take up a circular cross section 11a and 12a as shown by the dotted line in figure 4.

If the hoses 11 and 12 in figure 4 are pressurized with a small pressure, they will finally extend as shown by11b and 12b and exert a small pressure force against the profile. As the pressure in the hoses increases the hoses will expand where there is free room for the expansion. The radial expansion will be stopped by tangential tensions in the tissue and by barriers on the outside of the hose.

As a consequence of the embedded tissue in these thin-walled, lay flat hoses the circumference of the hoses will, by and large, be the same if the hoses are pressurized or not. The tangential tension in the tissue will seek to straighten all buckling of the hoses, something which leads to an associated pressure force on the profile 2 and this pressure force will be greatest where the buckling of the circumference of the hose is largest.

As can be seen in figure 6 the buckling of the hose circumference is largest towards the bottom of the U-profile and the hoses will therefore exert the greatest pressure force in this area. The pressure force against the profile is the sum of the pressure force as a consequence of the internal pressure in the hose and the pressure force as a consequence of the tangential tensions in the tissue that seeks to straighten all buckling of the hose material. If the U-shaped profile is made with a greater material thickness in the bottom of the U-shape this effect will be reinforced as the surface here comes nearer the centre struts 13 and 14. In a preferred embodiment the centre struts 13, 14 are adjustable with regard to the electrode plate1 such that the positioning of the profile 2 with regard to the hoses 11b,12b can be adjusted to optimal press conditions. If the centre struts in figure 6 are displaced upwards toward the slit opening 4 the hose will finally also lie against the warm electrode plate.

This cooperation between the tangential tensile forces in the circumference of the tissue and the pressure forces from the pressure medium inside the hoses will lead to that air which is entrapped in the melt on the inside of the U-profile will be forced outwards along the side edges on the profile and be evacuated into the surrounding air. The placing of the through-running struts 13 and 14 with regard to the placing of the profile 6 is thus decisive for how the distribution of the pressure against the profile will be when the hoses are pressurized

The hoses are preferably reinforced with a tissue and the hoses can be pressurized at very large pressures such that associated large pressure forces arise. Optimal pressure forces will be dependent on the viscosity of the melt which is established inside the U-profile as a consequence of the warm plate edge but also how form-stable the U-profile is. The higher the melt viscosity the higher the forces are necessary to drive out entrapped air.

The necessary press-forces are also dependent on the material thickness of the profile. A thick-walled U-profile 1 of a relatively rigid plastic material requires a higher pressure to drive out air and to compensate for the volume reduction of the melt as it is cooled down and ends up in a stable form. Relevant pressure in the hoses can vary from the order of 1 bar to 40 bars. In many cases it will be optimal to start with a relatively low pressure to increase thereafter as the melt inside the profile becomes more form stable. If one starts with a pressure force that is too great one will risk that the melt between the U-profile and the warm plate edge is forced out so that there will not be enough glue melt left for the profile to be glued to the electrode plate.

The present invention is set up such that the pressure in the hoses and the associated pressure force can be regulated continuously over time such that the pressure is optimal at all times with regard to the driving out of the air and the compensation for volume reduction when the melt is cooling.

If the plastic material in the profile is relatively soft and if the melt viscosity is relatively low, one can imagine using hoses that are not reinforced. However, hoses that are not reinforced are considerably less wear resistant than hoses that have been reinforced and they will also expand more without control as they are not supported by a reinforcement such as a tissue. The hoses with no reinforcement will expand freely where they are not supported and at higher internal pressure they will puncture more easily.

Thus, it is preferred to use reinforced, thin-walled hoses and use the special properties that such hoses convey with regard to the hoses that are not reinforced. As mentioned, the circumference of a tissue reinforced hose will be relatively unaffected by the internal pressure in the hose in contrast to a hose without reinforcement.

After the hoses 11 and 12 in figure 4 have been pressurized they will have a form which is shown in 11b and 12b in figure 6. Where the hoses are not supported by the contours 5 and 6 and also the profile 2, they will seek to attain a circular cross section. In the hose cross section there will be tangential tensile forces which seek to stretch the hose material and there are these forces which are applied specifically in the present invention as they cooperate with pressure forces from the fluid as explained earlier in the text.

After the hoses 11b and 12b are lying against the profile and all the air is forced out of the melt, the cooling down can start. In the figures 4, 5 and 6 the channels 17 to 22 are shown where a cooling medium such as air or water can circulate. Similar to the pressure in the hoses, the temperature in the cooling medium that flows in the cooling channels, is regulated continuously such that optimal conditions can be established for the purpose of driving the air out from the melt and also compensate for the volume reduction of the melt during the course of the cooling. In a preferred case, the protrusion 9 in figure 4 can also contain cooling channels (not shown in the drawing). In this way it is achieved that the hoses 11b and 12b in figure 6 are also cooled down so that the lifetime of the hoses is extended. In another preferred embodiment water can be used instead of air to pressurize the hoses 11b and 12b. By tempering the water, it will be possible to cool the hoses 11b and 12b at the same time as a better and more controlled cooling of the profile 2 is achieved.

The construction that is described above can, for example, also be carried out so that it is divided into two parts along the plane C-C through the centre of the electrode plate as shown in figures 4, 5 and 6. The two halves can possibly be hinged in a lower edge so that they come together about the plate edge with a rotating movement.

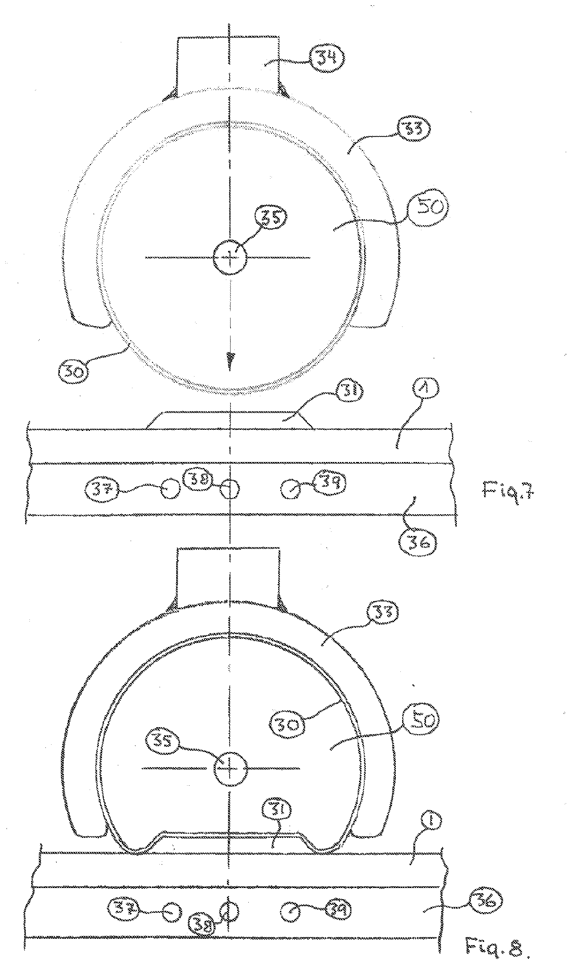

Embodiments of the present invention are shown in figures 7, 8 and 9 where only one hose is used to fasten an insulating plastic body to an electrode plate. Figure 9 is described earlier in connection with an embodiment of the invention to fasten a U-shaped profile to a plate edge.

In the following an embodiment of the invention shall be described where a plate-formed insulating element is fastened to a surface on the electrode plate.

Figure 7 shows a cross section of a device for the fastening of an insulating plate 31 on an electrode plate 1. The electrode plate is preheated in the same way as described previously in the area the protective plate shall be fastened to.

As in the example with the U-shaped profile, a reinforced lay flat hose 30 is used here too. The figure shows that the insulating plate 31 is fastened to the one side of the electrode plate 1 but the welding of an insulating plate on each side of the electrode plate 1 can also take place at the same time. The figure shows an alternative embodiment of the invention where the hose 30 is arranged inside a chamber formed as a rigid loop 33 with a stiffened beam 34 which is somewhat longer than the length of the insulating plate 31.

The loop surrounds, in the main, the hose 30 which is set under pressure. The hose is fitted with a through-running strut 35 that takes up the tensile forces in the hose. At each end of the hose there are end plugs where the struts are fastened (not shown in the drawing). The loop 33 is permanently positioned with regard to the end plugs but movable up and down in regard to the contact table 36 where the electrode plate 1 with the insulating plate 31 is placed. The pressure medium, such as, for example air or water is supplied to the hose via one of the end plugs, and the cooling down takes place in that a cooling medium, such as, for example water, circulates in the channels 37, 38 and 39 in the contact table 36 and/or the hose 30.

The loop 33 with the pressurized hose 30 is raised above the contact table 36 when the electrode plate 1 with the insulating plate 31 is placed in position under the hose 30. The loop 33 with the pressurized hose 30 is now moved in the direction towards the insulating plate 31, and when the hose gradually presses against the plate 31, the force of the pressing will lead to the air in the melt between the insulating plate 31 and the electrode plate 1 being forced out to the sides and out to the surrounding air.

Figure 8 shows a situation where the hose 30 has pressed the whole plate 31 to lie against the electrode plate 1 and the cooling down can start in that a cooling medium flows through the channels 37, 38 and 39 and/or through the hose 30. A soft, heat resistant mat can be arranged between the hose 30 and the insulating plate 31 (not shown in the drawing) corresponding to what was shown in figure 4 related to the melting-on of the U-shaped profile. Of course, it is not indifferent if it is the loop 30 that moves down or that the contact table moves up.

To avoid that the insulating plate 31 becomes damaged when the zinc shall be shaved off from the electrode plate 1, it is preferred that a groove has been cut into the electrode plate so that the insulating plate can be fastened in this groove. Then the insulating plate has beveled edges that are adapted to how deep down in the electrode plate it is sunk. (Not shown on the drawing).

The insulating plate can be in the form of a straight, flat band or a flat band where one of the longitudinal side edges has a buckling that can function as a so-called "diskette" (not shown in the drawing).

### Squeezing force on plastic strips

The interaction between the tangential tensile forces in the hose material and the internal pressure force from the pressure medium in the hoses is an important point in the present invention. The squeezing force on the plastic strips is made up of not only the radial pressure forces as a consequence of the internal pressure in the hoses, but the squeezing force is a combination of these and the tangential stretch in the hose material.

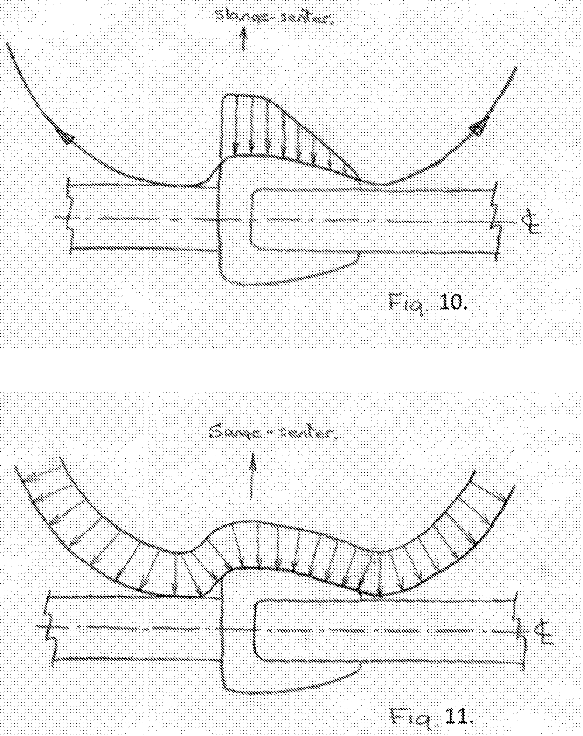

Figure 10 shows how the tangential tension in the hose material tries to push the U-shaped edge strip radially outwards when the hose(s) are pressurized. This leads to a pressure force onto the edge strip as the arrow shows in the figure. It is this pressure force that pushes the air out from the melt between the cathode plate and the strip. To be able to push out the air, this force must be greatest at the bottom of the U-shaped edge strip and this is achieved by positioning the centre line of the hose(s) such that the distance from the highest point on the U-strip to the centre of the hose is small.

However, there are many parameters that affect the melt and the float roads to the air that shall be evacuated, and the optimal positioning of the edge strip with regard to the hose centres is therefore achieved by adapting this positioning according to the other process conditions.

The geometry to the U-profile is also important. Figure 10 shows an alternative embodiment of the U-shaped edge strip where the thicker material in the bottom of the profile leads to the tangential tensile forces in the hose material in this area becoming particularly large, something which favours the forcing out of the air from the melt.

The arrows in figure 11 show how the internal pressure acts on the hose material and on the U-shaped edge strip. This pressure will not contribute to evacuate air from the plastic melt but, on the contrary, close the air inside the melt.

Thus, it is the cooperation between the tangential stretch forces in the hose material and the pressure force from the internal hose pressure that leads to the air in the melt being evacuated in a safe way.

The internal pressure is adjusted first to a wanted pressure force to push out the air and thereafter to compensate for the subsequent shrinking of the melt as a consequence of the cooling down process. Therefore, it is in some cases desirable to regulate the pressure continuously during the cooling down process.

### Course of events when the hoses are pressurised

It can be a preferred solution that the hose(s) are first pressurised after the plastic body is positioned with regard to the hose / hoses, but this is no prerequisite. The method with regard to the present invention can be carried out even if the hoses are pressurised in advance. In practice, a preferred embodiment is that the hose / hoses are somewhat inflated as the plastic body is positioned, and to increase the pressure thereafter.

Before the hoses are pressurised there is no tangential stretch tensions in the hose material, but as the internal pressure increases the hose cross section will become larger as the hose material is forced radially outwards by the pressure medium inside the hose(s).The cross section tries to take up a circular form and gradually the tangential stretch tensions in the hose cross sections will increase in step with the increasing internal pressure. These tangential stretch tensions in the hose cross sections will lead to a stretching in the hose material as a consequence of the hoses trying to inflate themselves to take up a circular cross section. A tangential stretch arises as a consequence of the hose cross sections not managing to take up a circular cross section as the hoses push against the contours 5 and 6 and also the profile 2. It is dependent on the elastic properties of the hose material if this tangential stretch leads to a large or small expansion of the hose surfaces. The surface of a non-reinforced hose will, for example, expand more than the surface of a reinforced hose, as the reinforcement has a considerably higher E-module than the hose material in general.

Compared to a non-reinforced hose, a reinforced hose will preferably keep its circumference independently of the internal pressure. However, the reinforcement in a reinforced hose has also elastic properties such that this will expand also, but then to a much smaller extent than a non-reinforced hose. A reinforced hose has, in some cases, advantages to a non-reinforced hose and can therefore be a preferred embodiment. A reinforced hose will also expand but the expansion will be much more controlled than the expansion of a non-reinforced hose.

The radial expansion will be stopped by the tangential tensions in the tissue. However, this does not mean that the hose surface does not increase with the increasing internal pressure in the hoses. For example, when a tissue-reinforced lay flat hose is pressurised, the hose cross sections will first try to take up a circular shape, and at increasing internal pressure corresponding increasing tangential stretch tensions will arise in the hose cross sections. These tangential tensions will lead to a stretching in the fibres and the fibres will be stretching until the tension in the fibres have become so large that they balance the internal pressure. A reinforced hose will, in other words, get an expanded surface when it is pressurised, but smaller expansion than a non-reinforced hose with the same internal pressure. However, the expansion will be dependent on the elasticity of the fibres that are used in the reinforcement.

Polyester fibres have an elastic expansion at loads of the order of (10-30) % dependent on the characteristics of the fibres. A tissue reinforcement can be carried out in many different ways to obtain different effects dependent on type of fibres, attachment angle, fibre tightness, etc. With a fibre-reinforced embodiment of the hoses, we will be able to operate at a higher pressure than in the use of non-reinforced hoses, something that can be necessary where the thermoplastic melt requires high pressure as a consequence of, for example, high viscosity. For example, the reinforcement can also be in the form of a steel platted tissue where the reinforcement threads are made from steel or metal, but this will, in most cases, be too rigid for the present application area.

### Definitions

In the different figures and embodiments, a protrusion 9, contact table 36 and strut 51 are shown which all function as barriers that can form a pressure force together with the hose(s). This is shown in figure 4 (protrusion 9), figures 7 and 8 (contact table 36) and figure 9 (strut 51). "Barrier" is thereby a generalisation of a protrusion, contact table and strut.

The expression "centre line" is used in here as a "symmetrical line for a (bordered) surface". The bordered surface is, in this case, the plate edge with the applied U-shaped plastic profile and the plate area with the applied plastic strip. In other words, the figures are equal on both sides of the centre line. This is shown in figures 6, 8 and 9 where the centre line is the dotted line in the middle of the figure (so that the right and the left side are alike).

Part 23 is described above as if it is a hinged arm. The figures 4, 6 and 9 show this part. Part 23 is generally a means to hold and bring the electrode plate to a wanted position(s) and can also be described as a force transmitting element.

## Claims

1. Method for the fastening of one or more electrically insulating thermoplastic bodies (2,3,31) on an electrode plate (1) for the precipitation of metal from an electrolyte, **characterised in that** it is comprised of the following steps:
a) the area on the electrode plate (1) where the thermoplastic body (2,3,31) is applied is heated up to a temperature at or above the melting point for the thermoplastic body,
b) the thermoplastic body (2,3,31) is brought onto the heated surface on the electrode plate (1), and the surface of the thermoplastic body that is in contact with the heated surface on the electrode plate melts,
c) the thermoplastic body (2,3,31) is subjected to a pressure force that pushes the thermoplastic body against the surface of the electrode plate (1), where the pressure force is formed by one or more hoses (11,12,30,50), and
d) the thermoplastic body (2,3,31) and the electrode plate (1) are cooled down while the pressure force is maintained until the thermoplastic is in a stable form.

2. Method according to claim 1, **characterised in that** in step c) the pressure force against the insulating plastic body first operates in the area in and around the centre line of the cross section of the plastic body for thereafter to operate on both sides of the centre line so that the whole thermoplastic body is forced firmly against the electrode plate at the same time as this pressure force against the thermoplastic body is approximately the same along the whole longitudinal extension of the thermoplastic body.

3. Method according to claim 2, **characterised in that** entrapped air in the melt between the thermoplastic body (2,3,31) and the electrode plate (1) is forced out, preferably via the shortest route, from the melt formed by the thermoplastic body.

4. Method according to claim 3, **characterised in that** the internal pressure in the hose(s) cooperates with the tangential stretch in the hose surface(s) in such a way that the air in the melt between the hot electrode plate (1) and the internal surface of the thermoplastic body is forced out of the melt area.

5. Method according to claim 1, **characterised in that** the cooling down in step d) takes place under increasing applied pressure from the hose(s) (11,12,30,50).

6. Method according to one or more of the preceding claims,
**characterised in that** the pressure force from the hose(s) (11,12,30,50) against the thermoplastic body on the surface of the electrode plate (1) is changed in step c) and/or d)
by supplying a pressure medium, , to the hose(s) and/or
**in that** the hose(s) (11,12,30,50) are squeezed between the side walls (5,6,9,33) in a chamber (8) where the method takes place and the thermoplastic body (2,3,31) on the electrode plate.

7. Method according to claim 6, **characterised in that** the hose(s) are closed at both ends with end plugs connected with a strut that keep the end plugs at a constant distance from each other and takes up the forces which would otherwise be active in the longitudinal direction of the hose(s) (11,12,30,50) when they/it is pressurised and where the hose(s) (11,12,30,50) preferably keep their circumference, independent of the internal pressure.

8. Method according to claim 7, **characterised in that** the hose(s) are closed at either end with end plugs connected with a strut that maintains the end plugs at a constant distance from each other, and that the hoses are adjustable with respect to the electrode plate.

9. Method according to claim 1, **characterised in that** between the thermoplastic body and the hose(s) are inserted an insulating, soft mat (15) of a heat resistant material before step c).

10. Method according to claim 1, **characterised in that** the thermoplastic body/bodies are edge profiles or plate strips which are applied to one or more edges or surfaces on the electrode plate (1).

11. Method according to claim 1, **characterised in that** the hose(s) (11,12,30,50) are reinforced.

12. Device to carry out the method according to one or more of the claims 1-11,
**characterised in that** the device is comprised of:
means to heat one or more chosen areas of the surface of the electrode plate,
means to place one or more electrical insulating thermoplastic bodies (2,3,31) on the chosen areas of the electrode plate,
means to hold and bring the electrode plate to wanted position(s) (23),
one or more hoses (11,12, 30,50,) arranged to apply pressure against the electrically insulating thermoplastic bodies on the chosen areas on the electrode plate, and also
means for cooling down of the thermoplastic bodies,.

13. Device according to claim 12 to apply a thermoplastic, mainly U-shaped edge profile (2,3) on one or more edges of the electrode plate (1),
**characterised in that** the device is comprised of:
one or more force transmitting elements (23) brought against one or more of the edge(s) on the electrode plate (1) and set up to provide fore against the electrode edge(s)
one or more chambers (8) with arch-shaped side walls (5,6) with a slit opening (4) that is at least somewhat larger than the electrode plate (1) with an applied edge profile (2) so that the edge of the electrode plate with applied edge profile can pass through,
one or more hoses (11, 12) placed on either side of the electrode plate (1) inside the chamber(s) (8) set up to exert pressure against the profile (2,3), and
a protrusion (9) in the chamber (8) where the protrusion is set up to place a pressure together with the hose(s) (11,12) arranged such that the edge profiles (2,3) lie against the protrusion when the force-transmitting element(s) (23) are activated against the end edge(s) on the electrode plate (1).

14. Device according to claim 12 to apply a thermoplastic, mainly U-shaped edge profile (2,3) on one or more edges of the electrode plate (1),
**characterised in that** the device is comprised of:
one or more force transmitting elements (23) placed against one or more of the edges on the electrode plate (1) and set up to provide force against the electrode edge(s),
one or more chambers (8) with arch-shaped side walls (5,6) with a slit opening (4) that is at least somewhat larger than the electrode plate (1) with affixed edge profile (2), so that the edge of the electrode plate with affixed edge profile can pass through, and a hose (50) placed inside the chamber(s) (8) arranged to provide pressure against the edge at the end of the electrode plate (1) and the thermoplastic edge profile (2), so that these are squeezed against the hose (50) that is pressed against the sides (5,6) and the bottom in the chamber (8) when the force transmitting element(s) (23) are activated, and press against the edge(s) of the electrode plate, or when the hose is pressurised.

15. Device according to claim 12 to affix a thermoplastic plate strip (31) onto one or more surfaces on the electrode plate (1), **characterised in that** the device is comprised of a positioning appliance (34) that places a rigid loop (33) that holds a hose (30) set up to be pressurised inside the loop, where the positioning appliance (34) can be moved towards the plate strip or vice versa so that the hose (30) exerts an even pressure on the plate strip (31) in the longitudinal direction against the electrode plate (1) when the hose is pressurised.

16. Device according to one or more of the claims 12-15,
**characterised in that** the means for cooling down the thermoplastic bodies are arranged such that the cooling down takes place with the help of direct air cooling where the device is not a closed chamber but has an open embodiment, and/or by cooling channels (17,18,19,20,21,22) in the device to impart an edge profile (2,3) or cooling channels (37,38,39) in a contact table (36) which the electrode plate (1) is placed on to affix a plate strip (31), respectively.

## Patentansprüche

1. Verfahren zum Befestigen eines oder mehrerer elektrisch isolierender thermoplastischer Körper (2, 3, 31) auf einer Elektrodenplatte (1) zur Abscheidung von Metall aus einem Elektrolyten, **dadurch gekennzeichnet, dass** es aus den folgenden Schritten besteht:
a) die Fläche auf der Elektrodenplatte (1), in der der thermoplastische Körper (2, 3, 31) aufgebracht wird, wird auf eine Temperatur erhitzt, die an oder über dem Schmelzpunkt des thermoplastischen Körpers liegt,
b) der thermoplastische Körper (2, 3, 31) wird auf die erhitzte Oberfläche auf der Elektrodenplatte (1) gebracht, und die Oberfläche des thermoplastischen Körpers, die mit der erhitzten Oberfläche auf der Elektrodenplatte in Kontakt steht, schmilzt,
c) der thermoplastische Körper (2, 3, 31) wird einer Druckkraft ausgesetzt, die den thermoplastischen Körper gegen die Oberfläche der Elektrodenplatte (1) drückt, wobei die Druckkraft durch einen oder mehrere Schläuche (11, 12, 30, 50) gebildet wird, und
d) der thermoplastische Körper (2,3,31) und die Elektrodenplatte (1) werden abgekühlt, während die Druckkraft aufrechterhalten wird, bis der thermoplastische Körper eine stabile Form aufweist.

2. Verfahren nach Anspruch 1, **dadurch gekennzeichnet, dass** in Schritt c) die Druckkraft gegen den isolierenden Kunststoffkörper zuerst in der Fläche in und um die Mittellinie des Querschnitts des Kunststoffkörpers wirkt, um danach zu beiden Seiten der Mittellinie derart zu wirken, dass der gesamte thermoplastische Körper gleichzeitig fest gegen die Elektrodenplatte gedrückt wird, während diese Druckkraft gegen den thermoplastischen Körper entlang der gesamten Längserstreckung des thermoplastischen Körpers ungefähr gleich ist.

3. Verfahren nach Anspruch 2, **dadurch gekennzeichnet, dass** gefangene Luft in der Schmelze zwischen dem thermoplastischen Körper (2, 3, 31) und der Elektrodenplatte (1) bevorzugt auf kürzestem Weg aus der Schmelze, die von dem thermoplastischen Körper gebildet wird, herausgedrückt wird.

4. Verfahren nach Anspruch 3, **dadurch gekennzeichnet, dass** der Innendruck in dem Schlauch (den Schläuchen) mit der tangentialen Dehnung in der/den Schlauchoberfläche(n) derart zusammenwirkt, dass die Luft in der Schmelze zwischen der heißen Elektrodenplatte (1) und der inneren Oberfläche des thermoplastischen Körpers aus der Schmelzenfläche herausgedrückt wird.

5. Verfahren nach Anspruch 1, **dadurch gekennzeichnet, dass** das Abkühlen in Schritt d) unter zunehmendem angelegtem Druck von dem Schlauch oder den Schläuchen (11, 12, 30, 50) stattfindet.

6. Verfahren nach einem oder mehreren der vorstehenden Ansprüche, **dadurch gekennzeichnet, dass** in Schritt c) und/oder d) die Druckkraft des Schlauchs oder der Schläuche (11, 12, 30, 50) gegen den thermoplastischen Körper auf der Oberfläche der Elektrodenplatte (1)
durch Zuführen eines Druckmediums zu dem Schlauch oder den Schläuchen, und/oder dadurch, dass der Schlauch oder die Schläuche (11, 12, 30, 50) zwischen den Seitenwänden (5, 6, 9, 33) in einer Kammer (8), in der das Verfahren stattfindet, und dem thermoplastischen Körper (2, 3, 31) auf der Elektrodenplatte gequetscht werden, geändert wird.

7. Verfahren nach Anspruch 6, **dadurch gekennzeichnet, dass** der Schlauch oder die Schläuche an beiden Enden mit Endstopfen verschlossen werden, die mit einer Strebe verbunden sind, die die Endstopfen in einem konstanten Abstand voneinander hält und die Kräfte aufnimmt, die sonst in der Längsrichtung des Schlauchs oder der Schläuche (11, 12, 30, 50) wirken würden, wenn sie mit Druck beaufschlagt werden, und wobei der Schlauch oder die Schläuche (11, 12, 30, 50) bevorzugt seinen/ihren Umfang unabhängig von dem Innendruck beibehalten.

8. Verfahren nach Anspruch 7, **dadurch gekennzeichnet, dass** der Schlauch oder die Schläuche an beiden Enden mit Endstopfen verschlossen werden, die mit einer Strebe verbunden sind, die die Endstopfen in einem konstanten Abstand voneinander hält, und dass die Schläuche in Bezug auf die Elektrodenplatte einstellbar sind.

9. Verfahren nach Anspruch 1, **dadurch gekennzeichnet, dass** zwischen dem thermoplastischen Körper und dem Schlauch oder den Schläuchen vor Schritt c) eine isolierende, weiche Matte (15) aus einem hitzebeständigen Material eingelegt wird.

10. Verfahren nach Anspruch 1, **dadurch gekennzeichnet, dass** der/die thermoplastische(n) Körper Kantenprofile oder Plattenstreifen sind, die auf eine oder mehrere Kanten oder Oberflächen auf der Elektrodenplatte (1) aufgebracht werden.

11. Verfahren nach Anspruch 1, **dadurch gekennzeichnet, dass** der Schlauch oder die Schläuche (11, 12, 30, 50) verstärkt sind.

12. Vorrichtung zum Durchführen des Verfahrens nach einem oder mehreren der Ansprüche 1-11, **dadurch gekennzeichnet, dass** die Vorrichtung aus Folgendem besteht:
Mittel zum Erhitzen einer oder mehrerer ausgewählter Flächen der Oberfläche der Elektrodenplatte,
Mittel zum Platzieren eines oder mehrerer elektrisch isolierender thermoplastischer Körper (2, 3, 31) auf den ausgewählten Flächen der Elektrodenplatte,
Mittel zum Halten und Verbringen der Elektrodenplatte in die gewünschte(n) Position(en) (23),
ein oder mehrere Schläuche (11, 12, 30, 50), die eingerichtet sind, um Druck gegen die elektrisch isolierenden thermoplastischen Körper auf den ausgewählten Flächen auf der Elektrodenplatte auszuüben, und auch
Mittel zum Abkühlen der thermoplastischen Körper.

13. Vorrichtung nach Anspruch 12 zum Aufbringen eines thermoplastischen, hauptsächlich U-förmigen Kantenprofils (2, 3) auf einer oder mehreren Kanten der Elektrodenplatte (1), **dadurch gekennzeichnet, dass** die Vorrichtung aus Folgendem besteht:
ein oder mehrere Kraft übertragende Elemente (23), die gegen eine oder mehrere der Kanten an der Elektrodenplatte (1) gebracht werden und eingerichtet sind, um Kraft gegen die Elektrodenkante(n) bereitzustellen,
eine oder mehrere Kammern (8) mit bogenförmigen Seitenwänden (5, 6) mit einer Schlitzöffnung (4), die mindestens etwas größer ist als die Elektrodenplatte (1) mit einem aufgebrachtem Kantenprofil (2), so dass die Kante der Elektrodenplatte mit aufgebrachtem Kantenprofil durchtreten kann,
ein oder mehrere Schläuche (11, 12), die auf beiden Seiten der Elektrodenplatte (1) innerhalb der Kammer(n) (8) platziert sind, die eingerichtet sind, um Druck gegen das Profil (2, 3) auszuüben, und einen Vorsprung (9) in der Kammer (8), wobei der Vorsprung eingerichtet ist, um zusammen mit dem Schlauch/den Schläuchen (11, 12) einen Druck auszuüben, der derart eingerichtet ist, dass die Kantenprofile (2, 3) gegen den Vorsprung liegen, wenn das/die Kraft übertragende(n) Element(e) (23) gegen die Endkante(n) auf der Elektrodenplatte (1) aktiviert wird/werden.

14. Vorrichtung nach Anspruch 12 zum Aufbringen eines thermoplastischen, hauptsächlich U-förmigen Kantenprofils (2, 3) auf einer oder mehreren Kanten der Elektrodenplatte (1), **dadurch gekennzeichnet, dass** die Vorrichtung aus Folgendem besteht:
ein oder mehrere Kraft übertragende(s) Element (23), das/die gegen eine oder mehrere der Kanten an der Elektrodenplatte (1) platziert und eingerichtet ist/sind, um eine Kraft gegen die Elektrodenkante(n) bereitzustellen,
eine oder mehrere Kammern (8) mit bogenförmigen Seitenwänden (5, 6) mit einer Schlitzöffnung (4), die mindestens etwas größer ist als die Elektrodenplatte (1) mit befestigtem Kantenprofil (2), so dass der Rand der Elektrodenplatte mit befestigtem Kantenprofil durchtreten kann, und einem Schlauch (50), der innerhalb der Kammer(n) (8) platziert ist, der eingerichtet ist, um Druck gegen die Kante an dem Ende der Elektrodenplatte (1) und des thermoplastischen Kantenprofils (2) derart bereitzustellen, dass diese gegen den Schlauch (50) gequetscht werden, der gegen die Seiten (5, 6) und den Boden in der Kammer (8) gedrückt wird, wenn das/die Kraft übertragende(n) Element(e) (23) aktiviert werden und gegen die Kante(n) der Elektrodenplatte drücken, oder wenn der Schlauch mit Druck beaufschlagt wird.

15. Vorrichtung nach Anspruch 12 zum Anbringen eines thermoplastischen Plattenstreifens (31) auf einer oder mehreren Oberflächen der Elektrodenplatte (1), **dadurch gekennzeichnet, dass** die Vorrichtung aus einer Positioniereinrichtung (34) besteht, die eine starre Schleife (33) platziert, die einen Schlauch (30) hält, der eingerichtet ist, um innerhalb der Schleife mit Druck beaufschlagt zu werden, wobei die Positioniereinrichtung (34) in Richtung des Plattenstreifens oder umgekehrt derart bewegt werden kann, dass der Schlauch (30) einen gleichmäßigen Druck an den Plattenstreifen (31) in der Längsrichtung gegen die Elektrodenplatte (1) ausübt, wenn der Schlauch mit Druck beaufschlagt ist.

16. Vorrichtung nach einem oder mehreren der Ansprüche 12-15, **dadurch gekennzeichnet, dass** die Mittel zum Abkühlen der thermoplastischen Körper derart eingerichtet sind, dass das Abkühlen mit Hilfe einer direkten Luftkühlung stattfindet, wobei die Vorrichtung keine geschlossene Kammer ist, sondern eine offene Ausführungsform aufweist, und/oder durch Kühlkanäle (17, 18, 19, 20, 21, 22) in der Vorrichtung, um ein Kantenprofil (2, 3) oder Kühlkanäle (37, 38, 39) in einem Kontakttisch (36) aufzuerlegen, auf den die Elektrodenplatte (1) zum Befestigen jeweils eines Plattenstreifens (31) platziert ist.

## Revendications

1. Procédé de fixation d'un ou plusieurs corps thermoplastiques électriquement isolants (2,3,31) sur une plaque d'électrode (1) pour la précipitation de métal à partir d'un électrolyte, **caractérisé en ce qu'**il comprend les étapes suivantes :
a) la zone sur la plaque d'électrode (1) où le corps thermoplastique (2,3,31) est appliqué est chauffée jusqu'à une température égale ou supérieure au point de fusion du corps thermoplastique,
b) le corps thermoplastique (2,3,31) est amené sur la surface chauffée sur la plaque d'électrode (1), et la surface du corps thermoplastique qui est en contact avec la surface chauffée sur la plaque d'électrode fond,
c) le corps thermoplastique (2,3,31) est soumis à une force de pression qui pousse le corps thermoplastique contre la surface de la plaque d'électrode (1), où la force de pression est formée par un ou plusieurs tuyaux (11,12,30,50), et
d) le corps thermoplastique (2, 3, 31) et la plaque d'électrode (1) sont refroidis tandis que la force de pression est maintenue jusqu'à ce que le thermoplastique soit sous une forme stable.

2. Procédé selon la revendication 1, **caractérisé en ce que**, à l'étape c), la force de pression contre le corps en plastique isolant agit d'abord dans la zone à l'intérieur et autour de la ligne centrale de la section transversale du corps en plastique pour ensuite agir des deux côtés de la ligne centrale de sorte que l'ensemble du corps thermoplastique soit forcé de manière stable contre la plaque d'électrode en même temps que cette force de pression contre le corps thermoplastique qui est approximativement la même le long de toute l'extension longitudinale du corps thermoplastique.

3. Procédé selon la revendication 2, **caractérisé en ce que** l'air emprisonné dans la masse fondue entre le corps thermoplastique (2,3,31) et la plaque d'électrode (1) est expulsé, de préférence à travers le chemin le plus court, depuis la masse fondue formée par le corps thermoplastique.

4. Procédé selon la revendication 3, **caractérisé en ce que** la pression interne dans le ou les tuyaux coopère avec l'étirement tangentiel dans la ou les surfaces de tuyau de telle sorte que l'air dans la masse fondue entre la plaque d'électrode chaude (1) et la surface interne du corps thermoplastique soit expulsé de la zone de masse fondue.

5. Procédé selon la revendication 1, **caractérisé en ce que** le refroidissement à l'étape d) a lieu sous une pression appliquée croissante depuis le ou les tuyaux (11, 12, 30, 50) .

6. Procédé selon l'une ou plusieurs des revendications précédentes, **caractérisé en ce que** la force de pression depuis le ou les tuyaux (11, 12, 30, 50) contre le corps thermoplastique sur la surface de la plaque d'électrode (1) est modifiée à l'étape c) et/ou d)
en fournissant un milieu de pression, au(x) tuyau(x) et/ou **en ce que** le ou les tuyaux (11,12,30,50) sont pressés entre les parois latérales (5,6,9,33) dans une chambre (8) où le procédé a lieu et le corps thermoplastique (2,3,31) sur la plaque d'électrode.

7. Procédé selon la revendication 6, **caractérisé en ce que** le ou les tuyaux sont fermés aux deux extrémités avec des bouchons d'extrémité connectés à une entretoise qui maintient les bouchons d'extrémité à une distance constante l'un de l'autre et absorbe les forces qui seraient autrement actives dans la direction longitudinale du ou des tuyaux (11,12,30,50) lorsqu'il(s) est/sont sous pression et où le ou les tuyaux (11,12,30,50) maintiennent de préférence leur circonférence, indépendamment de la pression interne.

8. Procédé selon la revendication 7, **caractérisé en ce que** le ou les tuyaux sont fermés à chaque extrémité avec des bouchons d'extrémité connectés à une entretoise qui maintient les bouchons d'extrémité à une distance constante l'un de l'autre, et **en ce que** les tuyaux sont réglables par rapport à la plaque d'électrode.

9. Procédé selon la revendication 1, **caractérisé en ce qu'**un tapis flexible, isolant, (15) d'un matériau résistant à la chaleur est inséré entre le corps thermoplastique et le ou les tuyaux avant l'étape c).

10. Procédé selon la revendication 1, **caractérisé en ce que** le ou les corps thermoplastiques sont des profils de bord ou des bandes de plaque qui sont appliqués sur un ou plusieurs bords ou surfaces sur la plaque d'électrode (1).

11. Procédé selon la revendication 1, **caractérisé en ce que** le ou les tuyaux (11,12,30,50) sont renforcés.

12. Dispositif pour mettre en œuvre le procédé selon l'une ou plusieurs des revendications 1 à 11, **caractérisé en ce que** le dispositif est composé de :
moyens pour chauffer une ou plusieurs zones choisies de la surface de la plaque d'électrode,
moyens pour placer un ou plusieurs corps thermoplastiques isolants électriques (2,3,31) sur les zones choisies de la plaque d'électrode,
moyens pour maintenir et amener la plaque d'électrode à la (aux) position(s) souhaitée(s) (23),
un ou plusieurs tuyaux (11,12, 30,50) agencés pour appliquer une pression contre les corps thermoplastiques électriquement isolants sur les zones choisies sur la plaque d'électrode, et également de moyens de refroidissement des corps thermoplastiques.

13. Dispositif selon la revendication 12 pour appliquer un profil de bord thermoplastique, principalement en forme de U (2,3) sur un ou plusieurs bords de la plaque d'électrode (1), **caractérisé en ce que** le dispositif est composé de :
un ou plusieurs éléments de transmission de force (23) amenés contre un ou plusieurs des bords sur la plaque d'électrode (1) et mis en place pour fournir une force contre le(s) bord(s) de l'électrode
une ou plusieurs chambres (8) ayant des parois latérales en forme d'arc (5, 6) avec une ouverture de fente (4) qui est au moins un peu plus grande que la plaque d'électrode (1) avec un profil de bord appliqué (2) de sorte que le bord de la plaque d'électrode avec le profil de bord appliqué puisse passer à travers,
un ou plusieurs tuyaux (11, 12) placés de chaque côté de la plaque d'électrode (1) à l'intérieur de la ou des chambres (8) mis en place pour exercer une pression contre le profil (2,3), et une saillie (9) dans la chambre (8) où la saillie est mise en place pour placer une pression en coopération avec le ou les tuyaux (11,12) agencés de telle sorte que les profils de bord (2,3) reposent contre la saillie lorsque le ou les éléments de transmission de force (23) sont activés contre le(s) bord(s) d'extrémité sur la plaque d'électrode (1) .

14. Dispositif selon la revendication 12 pour appliquer un profil de bord thermoplastique, principalement en forme de U (2,3) sur un ou plusieurs bords de la plaque d'électrode (1), **caractérisé en ce que** le dispositif est composé de :
un ou plusieurs éléments de transmission de force (23) placés contre un ou plusieurs des bords sur la plaque d'électrode (1) et mis en place pour fournir une force contre le(s) bord(s) d'électrode,
une ou plusieurs chambres (8) ayant des parois latérales en forme d'arc (5,6) avec une ouverture de fente (4) qui est au moins un peu plus grande que la plaque d'électrode (1) avec un profil de bord fixé (2), de sorte que le bord de la plaque d'électrode avec un profil de bord fixé puisse passer à travers, et un tuyau (50) placé à l'intérieur de la ou des chambres (8) agencé pour fournir une pression contre le bord à l'extrémité de la plaque d'électrode (1) et le profil de bord thermoplastique (2), de sorte que ceux-ci soient pressés contre le tuyau (50) qui est pressé contre les côtés (5,6) et le fond de la chambre (8) lorsque le ou les éléments de transmission de force (23) sont activés, et pressent contre le(s) bord(s) de la plaque d'électrode, ou lorsque le tuyau est sous pression.

15. Dispositif selon la revendication 12 pour fixer une bande de plaque thermoplastique (31) sur une ou plusieurs surfaces sur la plaque d'électrode (1), **caractérisé en ce que** le dispositif est composé d'un appareil de positionnement (34) qui place une boucle rigide (33) qui maintient un tuyau (30) mis en place pour être mis sous pression à l'intérieur de la boucle, où l'appareil de positionnement (34) peut être déplacé vers la bande de plaque ou vice versa de façon à ce que le tuyau (30) exerce une pression uniforme sur la bande de plaque (31) dans la direction longitudinale contre la plaque d'électrode (1) lorsque le tuyau est mis sous pression.

16. Dispositif selon l'une ou plusieurs des revendications 12 à 15, **caractérisé en ce que** les moyens pour refroidir les corps thermoplastiques sont agencés de manière à ce que le refroidissement ait lieu à l'aide d'un refroidissement direct par air où le dispositif n'est pas une chambre fermée mais comporte un mode de réalisation ouvert, et/ou par des canaux de refroidissement (17,18,19,20,21,22) dans le dispositif pour conférer un profil de bord (2, 3) ou des canaux de refroidissement (37,38,39) dans une table de contact (36) sur laquelle la plaque d'électrode (1) est placée pour fixer une bande de plaque (31), respectivement.
